# EUROPÄISCHE PATENTSCHRIFT

(11) **EP 3 268 216 B1**
(45) Veröffentlichungstag und Bekanntmachung des Hinweises auf die Patenterteilung: **06.03.2019**
(21) Anmeldenummer: 16701029.7
(22) Anmeldetag: 20.01.2016
(51) Int. Cl.: B29C 70/50, B29C 70/54, B29C 70/42, B29C 70/20, B29C 70/30, B29K 101/12

(54) **VERFAHREN ZUR HERSTELLUNG VON FASERVERSTÄRKTEN KUNSTSTOFFBAUTEILEN**
METHOD FOR PRODUCING FIBER-REINFORCED PLASTIC COMPONENTS
PROCÉDÉ DE FABRICATION D'ÉLÉMENTS EN MATIÈRE PLASTIQUE RENFORCÉE DE FIBRES

(30) Priorität: 09.03.2015 DE 102015204142
(43) Veröffentlichungstag der Anmeldung: 17.01.2018
(73) Patentinhaber: Bayerische Motoren Werke Aktiengesellschaft, 80809 München (DE)
(72) Erfinder: BECK, Jürgen, 84048 Mainburg (DE); HEIM, Daniel, 85375 Neufahrn (DE)
(86) Internationale Anmeldenummer: PCT/EP2016/051064
(87) Internationale Veröffentlichungsnummer: WO 2016/142085

(56) Entgegenhaltungen:
- DE-A1- 19 537 737
- US-A1- 2011 111 168

## Beschreibung

Es wird ein Verfahren zur Herstellung von faserverstärkten Kunststoffbauteilen, insbesondere ein Verfahren zur Herstellung von Bauteilen aus thermoplastischem faserverstärktem Kunststoff ausgehend von mit Matrixmaterial imprägnierten Fasertapes, angegeben.

Faserverstärkte Kunststoffbauteile weisen eine Struktur aus Verstärkungsfasern auf, wobei die Struktur aus Verstärkungsfasern in ein Kunststoffmatrixmaterial eingebettet ist. Für komplexere und hochwertigere Bauteile ist oftmals eine mehrlagige Faserstruktur mit möglichst belastungsgerecht angeordneten Faserrichtungen notwendig. Als Ausgangsmaterial für die genannte Herstellung werden imprägnierte thermoplastische Fasertapes verwendet. Solche Fasertapes bestehen üblicherweise aus einer einlagigen bandförmigen Fasergrundstruktur, die bereits mit dem benötigten Matrixmaterial imprägniert ist. Zur Verfügung stehen solche Fasertapes z.B. als Rollenmaterial. In der Druckschrift DE 42 18 434 A1 wird beispielsweise eine Möglichkeit zur Herstellung solcher imprägnierter Fasertapes beschrieben.

Es ist bekannt, aus derartigen imprägnierten Fasertapes mehrlagige, rechteckige Platten herzustellen, die als Halbzeuge für die weitere Verarbeitung dienen. In der Druckschrift US 2011/0111168 A1 wird beschrieben, wie aus solchen Fasertapes multiaxiale ebene Platten gefertigt werden können, die eine möglichst richtungsunabhängige Festigkeit aufweisen, und die gelagert und später weiterverarbeitet werden können.

Gemäß dem Stand der Technik werden die Halbzeuge in einem Batchprozess durch statisches Pressen weiterverarbeitet, wobei die Platten zum Konsolidieren jeweils einzeln in eine Presse eingelegt werden. Dies hat den Nachteil, dass der Durchsatz der in einer Zeiteinheit produzierten Platten sinkt. Weiterhin werden die Platten gemäß dem Stand der Technik nur manuell zu- und abgeführt.
Es ist daher eine zu lösende Aufgabe zumindest einiger Ausführungsformen, ein Verfahren zur Herstellung von Bauteilen aus thermoplastischem faserverstärktem Kunststoff ausgehend von imprägnierten Fasertapes anzugeben, mittels dessen der Durchsatz der Halbzeuge beim Konsolidieren gesteigert werden kann und mittels dessen sich so Zeit und/oder Kosten einsparen lassen.
Diese Aufgabe wird durch ein Verfahren gemäß dem unabhängigen Patentanspruch gelöst. Vorteilhafte Ausführungsformen und Weiterbildungen gehen weiterhin aus den abhängigen Patentansprüchen, der nachfolgenden Beschreibung und aus den Zeichnungen hervor.

Gemäß der Offenbarung wird bei einem Verfahren zur Herstellung von Bauteilen aus thermoplastischem faserverstärktem Kunststoff eine Vielzahl von Halbzeugen hergestellt, die jeweils eine Mehrzahl von unkonsolidierten Lagen von mit Matrixmaterial imprägnierten Fasertapes aufweisen. Vorzugsweise weisen die Halbzeuge jeweils mehrere Lagen von Fasertapes auf, wobei in jeder Lage eine Vielzahl von nebeneinander angeordneten Fasertapes angeordnet ist, wobei die Fasertapes innerhalb einer Lage gleich oder unterschiedlich orientiert sein können. Die Fasertapes weisen vorzugsweise eine einlagige bandförmige Fasergrundstruktur aus Fasern auf, wobei die Fasergrundstruktur mit Matrixmaterial imprägniert ist. Die Fasertapes können auch als UD-Tapes bezeichnet werden.
Innerhalb eines Halbzeugs können die Fasern von Fasertapes benachbarter Lagen beispielsweise unterschiedlich orientiert sein. Vorzugsweise sind die Fasertapes zunächst miteinander nur durch lokale Verbindungen, wie z.B. punktuelle Schweißpunkte, verbunden. Somit liegen die Halbzeuge als unkonsolidierte Halbzeuge vor, d.h. die einzelnen Lagen der Halbzeuge sind vor dem Konsolidierungsprozess nicht vollflächig miteinander verbunden. Die Halbzeuge können hier und im Folgenden auch als Layups bezeichnet werden. Weiterhin liegen die einzelnen unkonsolidierten Halbzeuge vorzugsweise in vereinzelter Form vor, d.h. die Halbzeuge sind nicht miteinander verbunden.

Bei den Fasern der imprägnierten Fasertapes handelt es sich vorzugsweise um unidirektionale Endlosfasern. Die Fasern können beispielsweise Carbonfasern, Glasfasern, Aramidfasern, Basaltfasern oder Naturfasern sein. Das Matrixmaterial ist vorzugsweise ein thermoplastischer Kunststoff, beispielsweise PEEK, PEKK, PP, PE, PPS, TPE oder ein Polyamid.

Nach dem Herstellen der Vielzahl von Halbzeugen werden die Halbzeuge in einer Konsolidiereinrichtung derart angeordnet, dass sich die Halbzeuge in direktem Kontakt zueinander befinden. Mit anderen Worten berühren sich die Halbzeuge nach dem Anordnen in der Konsolidiereinrichtung zumindest teilweise. Insbesondere soll sich jedes Halbzeug nach dem Anordnen in der Konsolidiereinrichtung mit zumindest einem weiteren Halbzeug in unmittelbarem Kontakt befinden. Vorzugsweise stehen bis auf das erste und letzte in der Konsolidiereinrichtung angeordnete Halbzeug alle weiteren Halbzeuge mit zwei anderen Halbzeugen in unmittelbarem Kontakt, wobei die zwei anderen Halbzeuge das jeweilige Halbzeug an zwei gegenüberliegenden Seiten berühren. Durch das beschriebene Anordnen innerhalb der Konsolidiereinrichtung kann vorteilhafterweise der Durchsatz der Halbzeuge beim Konsolidieren gesteigert werden.

Nach dem Anordnen der Halbzeuge in der Konsolidiereinrichtung werden die Halbzeuge mittels der Konsolidiereinrichtung konsolidiert, wobei sich die Halbzeuge während des Konsolidierens zumindest teilweise miteinander verbinden. Beispielsweise können die Halbzeuge aufgrund eines Aufschmelzens, das z.B. aus einem Wärmeeintrag durch die Konsolidiereinrichtung resultiert, eine Verbindung miteinander eingehen.

Nach dem Konsolidiervorgang werden die miteinander verbundenen Halbzeuge mittels einer Trennvorrichtung getrennt. Somit liegen die Halbzeuge nach dem Trennen wieder in vereinzelter Form vor. Die Trennvorrichtung kann beispielsweise als Messer, Kreismesser, Scherenvorrichtung, Laser, Ultraschallklinge oder oszillierende Klinge ausgeführt sein.

Gemäß einer weiteren Ausführungsform werden die Halbzeuge während des Konsolidierens in einem kontinuierlichen oder quasi-kontinuierlichen Prozess durch eine Vielzahl von Heizzonen innerhalb der Konsolidiereinrichtung bewegt. Beispielsweise kann die Konsolidiereinrichtung als kombinierte Press- und Heizeinrichtung, insbesondere als Doppelbandpresse bzw. Intervallheizpresse, ausgebildet sein. Die Konsolidiereinrichtung weist vorzugsweise zwei Endlosbänder auf, zwischen denen die Halbzeuge beim Konsolidieren durch die einzelnen Heizzonen geführt werden. Vorzugsweise sind die Endlosbänder aus Stahl. Alternativ können die Endlosbänder auch Polytetrafluorethylen aufweisen oder aus Polytetrafluorethylen bestehen. Vorzugsweise weist die Konsolidiereinrichtung eine Vielzahl von Heizzonen auf. Die Heizzonen weisen dabei vorzugsweise verschiedene Temperaturen auf. Beispielsweise kann die Konsolidiereinrichtung eine erste Heizzone, die eine Temperatur von in etwa 100 °C aufweist, eine zweite Heizzone, die eine Temperatur von in etwa 380 °C aufweist, sowie eine dritte Heizzone, die eine Temperatur von in etwa 60 °C aufweist, umfassen. Vorzugsweise sind die erste, zweite und dritte Heizzone direkt hintereinander angeordnet, wobei die zweite Heizzone zwischen der ersten und dritten Heizzone angeordnet ist.

Gemäß einer weiteren Ausführungsform wird das Anordnen der Halbzeuge in der Konsolidiereinrichtung vollautomatisiert durchgeführt. Beispielsweise können ein oder mehrere Roboter die Halbzeuge greifen und in der Konsolidiereinrichtung anordnen. Die Konsolidiereinrichtung kann beispielsweise eine Zuführeinheit aufweisen, die z.B. als Förderband ausgebildet sein kann, und die die Halbzeuge der eigentlichen Press- und Heizeinrichtung zuführen kann. Der bzw. die Roboter können die Halbzeuge z.B. mittels Vakuumssauger oder Nadelgreifer greifen und in die Konsolidiereinrichtung bzw. die Zuführeinheit der Konsolidiereinrichtung einlegen. Mittels des automatisierten Handlings kann ein präzises und wiederholgenaues Anordnen der Halbzeuge erfolgen.

Gemäß einer weiteren Ausführungsform werden vor dem Konsolidieren jeweils ein oder mehrere Außeneinlegelemente zwischen zwei direkt benachbarten Halbzeugen angeordnet. Vorzugsweise sind die Außeneinlegelemente jeweils in ihrer Form an die direkt benachbarten Halbzeuge angepasst. Beispielsweise können zwei in direktem Kontakt zueinander angeordnete Halbzeuge eine Lücke ausbilden, in welcher ein oder mehrere Außeneinlegelemente angeordnet werden können. Insbesondere kann es sein, dass die zueinander angeordneten Halbzeuge teilweise gekrümmte Seitenflächen aufweisen, sodass es nicht möglich ist, die Halbzeuge derart in direktem Kontakt zueinander anzuordnen, dass eine Lücke zwischen den Halbzeugen vermieden werden kann. Durch das Anordnen eines oder mehrerer Außeneinlegelemente können beim Konsolidieren auftretende Probleme, wie z.B. ein Druckabfall aufgrund von Lücken zwischen den Halbzeugen, verhindert werden. Die Außeneinlegelemente weisen vorzugsweise einen Abstand von maximal 5 mm zu den Halbzeugen auf. Alternativ können die Außeneinlegelemente die Halbzeuge direkt kontaktieren. Vorzugsweise weisen die Außeneinlegelemente eine Dicke auf, die sich maximal um 1,5 mm von der Dicke der Halbzeuge unterscheidet, wobei unter der Dicke der Halbzeuge die Ausdehnung der Halbzeuge senkrecht zur Anordnungsrichtung der einzelnen Lagen von Fasertapes verstanden wird.

Gemäß einer weiteren Ausführungsform weisen die Halbzeuge eine Rahmenform mit zumindest einer Aussparung auf. Die Aussparung erstreckt sich vorzugsweise von einer Oberfläche eines Halbzeugs zur gegenüberliegenden Oberfläche des Halbzeugs. Lateral wird die Aussparung vorzugsweise allseitig von den unkonsolidierten Fasertapes eines Halbzeugs begrenzt. Gemäß einer bevorzugten Ausführungsform wird vor dem Konsolidieren der Halbzeuge jeweils ein Inneneinlegeelement in den Aussparungen der Halbzeuge angeordnet. Dadurch kann erzielt werden, dass auch mit Aussparungen versehene Halbzeuge konsolidiert werden können, da während des Konsolidiervorgangs keine Gefahr mehr besteht, dass prozessbedingt der beim Konsolidieren entstehende Druck abfällt. Durch das Herstellen von konsolidierten Halbzeugen mit Aussparungen kann zudem eine Materialeinsparung erzielt werden, da rahmenförmige Halbzeuge hergestellt werden können, ohne dass nach einem Konsolidiervorgang innenliegende Bereiche aus den Halbzeugen ausgeschnitten werden müssen.

Gemäß einer weiteren Ausführungsform werden die Inneneinlegeelemente vollautomatisiert in den Aussparungen angeordnet. Beispielsweise können die Inneneinlegeelemente mittels eines oder mehrerer Roboter in den Aussparungen angeordnet werden. Der bzw. die Roboter können z.B. Vakuumssauger oder Nadelgreifer oder andere Greifelemente aufweisen, mit denen die Inneneinlegeelemente gegriffen und in den Aussparungen positioniert werden können. Vorteilhafterweise kann durch das automatisierte Handling mittels eines oder mehrerer Roboter ein präzises und wiederholgenaues Einlegen der Inneneinlegeelemente erreicht werden.

Gemäß einer weiteren Ausführungsform werden die Inneneinlegeelemente nach dem Konsolidieren der Halbzeuge aus den Aussparungen entfernt. Das Entfernen der Inneneinlegeelemente kann beispielsweise vor oder nach dem Trennen der durch den Konsolidiervorgang miteinander verbundenen Halbzeuge erfolgen. Bevorzugt wird das Entfernen der Inneneinlegeelemente aus den Aussparungen mittels eines oder mehrerer Roboter in einem vollautomatisierten Prozess durchgeführt.

Gemäß einer weiteren Ausführungsform sind die Inneneinlegeelemente fest mit einem Band der Konsolidiereinrichtung verbunden. Beispielsweise können die Inneneinlegeelemente mit einem Endlosband der Konsolidiereinrichtung bzw. mit einem Endlosband der Doppelbandpresse fest verbunden sein. Die Inneneinlegeelemente können z.B. mit dem Band der Konsolidiereinrichtung verschweißt sein. Bei dieser Ausführungsform können die Halbzeuge nach dem Konsolidiervorgang derart aus der Konsolidiereinrichtung entnommen werden, dass die Halbzeuge vom Endlosband genommen werden, beispielsweise in einem vollautomatisierten Prozess mittels eines oder mehrerer Roboter, sodass die Aussparungen der Halbzeuge frei von den Inneneinlegeelement sind und die Inneneinlegeelemente am Endlosband der Konsolidiereinrichtung befestigt bleiben.

Gemäß einer weiteren Ausführungsform sind die Inneneinlegeelemente in ihrer Form und/oder Größe an die jeweiligen Aussparungen angepasst. Vorzugsweise weisen die Inneneinlegeelemente nach dem Anordnen in den Aussparungen allseitig einen Abstand von maximal 5 mm zu den Halbzeugen auf. Vorzugsweise weisen die Inneneinlegeelemente eine Dicke auf, die sich maximal um 1,5 mm von der Dicke der Halbzeuge unterscheidet.

Gemäß einer weiteren Ausführungsform sind die Inneneinlegeelemente und/oder Außeneinlegelemente als Einlegeplatten bzw. als Einlegebleche ausgebildet. Beispielsweise können die Inneneinlegeelemente und/oder Außeneinlegelemente Polytetrafluorethylen oder einen anderen hochtemperaturbeständigem Thermoplast aufweisen oder daraus bestehen. Alternativ können die Inneneinlegeelemente und/oder Außeneinlegelemente Aluminium, eine Aluminiumlegierung, Gummi oder Silikon aufweisen oder aus Aluminium, einer Aluminiumlegierung, Gummi oder Silikon bestehen.

Gemäß einer weiteren Ausführungsform weist zumindest ein Halbzeug eine Mehrzahl von innenliegenden Aussparungen auf, wobei vor dem Konsolidieren jeweils zumindest ein Inneneinlegeelement in jeder der Aussparungen angeordnet wird.

Weitere Vorteile und vorteilhafte Ausführungsformen des hier beschriebenen Verfahrens ergeben sich aus den im Folgenden in Verbindung mit den Figuren 1A bis 8 beschriebenen Ausführungsformen. Es zeigen:
- Fig. 1A bis Fig. 7: schematische Darstellungen ausgewählter Verfahrensschritte des hier beschriebenen Verfahrens zur Herstellung von Bauteilen aus thermoplastischem faserverstärktem Kunststoff ausgehend von Fasertapes gemäß verschiedenen Ausführungsbeispielen, und
- Fig. 8: eine Konsolidiereinrichtung in Form einer Doppelbandpresse gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente zur besseren Darstellbarkeit und/oder zum besseren Verständnis übertrieben dick oder groß dimensioniert dargestellt sein.

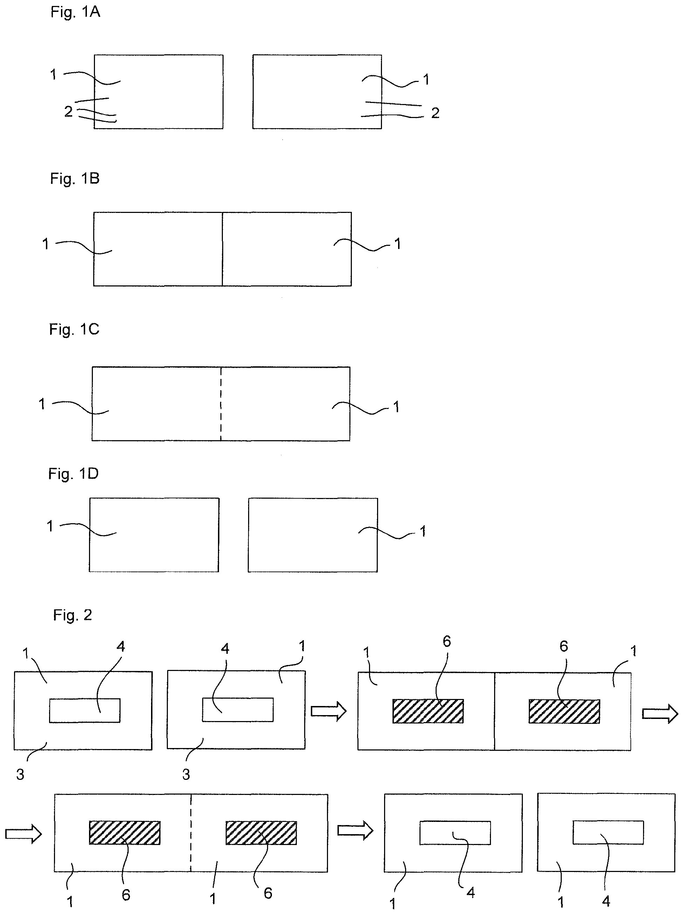

Die Figuren 1A bis 1D zeigen verschiedene Verfahrensschritte des hier beschriebenen Verfahrens zur Herstellung von faserverstärkten Kunststoffbauteilen. Im Schritt 1A werden zwei Halbzeuge 1 hergestellt, die jeweils eine Mehrzahl von unkonsolidierten Lagen von Fasertapes 2 aufweisen. Jedes Halbzeug 1 umfasst eine Vielzahl von Lagen von Fasertapes 2, wobei in jeder Lage mehrere Fasertapes 2 nebeneinander, gleich oder unterschiedlich orientiert, angeordnet sind. Die Halbzeuge 1 sind in einer Aufsicht senkrecht zu den einzelnen Lagen von Fasertapes 2 dargestellt. Die Halbzeuge 1 sind nach ihrer Herstellung nicht miteinander verbunden, sondern liegen in vereinzelter Form vor.

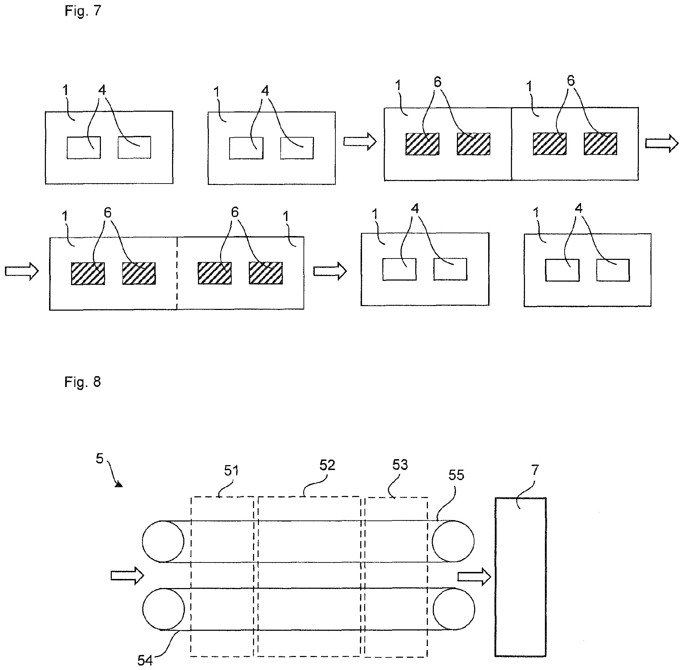

Im Verfahrensschritt 1B werden die Halbzeuge 1 in einer Konsolidiereinrichtung 5, wie sie z.B. in Figur 8 gezeigt ist, derart angeordnet, dass sich die Halbzeuge 1 in direktem Kontakt zueinander befinden. Beispielsweise können die Halbzeuge 1 mittels eines oder mehrerer Roboter in der Konsolidiereinrichtung 5 bzw. auf einer Zuführeinheit der Konsolidiereinrichtung 5 angeordnet werden, sodass sich die Halbzeuge 1 berühren. Zum Greifen der Halbzeuge 1 können der bzw. die Roboter beispielsweise mit einer oder mehreren Greifeinheiten, wie z.B. einem Vakuumssauger oder einem Nadelgreifer, ausgestattet sein.

In einem sich an den Verfahrensschritt 1B anschließenden Verfahrensschritt 1C werden die Halbzeuge 1 mittels der Konsolidiereinrichtung 5 konsolidiert, wobei sich die Halbzeuge 1 während des Konsolidiervorgangs zumindest teilweise miteinander verbinden. Die Konsolidiereinrichtung kann beispielsweise als kombinierte Press- und Heizeinrichtung ausgebildet sein. Während des Konsolidiervorgangs kann beispielsweise aufgrund eines zumindest teilweisen Aufschmelzens der Halbzeuge 1 aufgrund eines Wärmeeintrags eine Verbindung zwischen den nebeneinander angeordneten Halbzeugen erzeugt werden.

Anschließend werden die miteinander verbundenen Halbzeuge 1 mittels einer Trennvorrichtung 7, die sich an die Konsolidiereinrichtung 5 anschließen kann, getrennt. Nach dem Trennen der Halbzeuge 1 liegen die Halbzeuge 1 wieder in vereinzelter Form vor, d.h. die Halbzeuge 1 sind nach dem Trennvorgang mittels der Trennvorrichtung 7 nicht mehr miteinander verbunden. Die Trennvorrichtung 7 kann beispielsweise als Messer, Kreismesser, Schere, Laser, Ultraschallklinge oder als oszillierende Klinge ausgebildet sein.

In der Figur 2 ist ein hier beschriebenes Verfahren gemäß einem weiteren Ausführungsbeispiel dargestellt. Im Unterschied zu dem in den Figuren 1A bis 1D gezeigten Ausführungsbeispiel weisen die unkonsolidierten Halbzeuge 1 nach ihrer Herstellung eine Rahmenform auf. Die Halbzeuge 1 weisen eine Aussparung 4 auf, die sich von einer Oberfläche des jeweiligen Halbzeugs 1 zur gegenüberliegenden Oberfläche erstreckt. Vor dem Konsolidieren der Halbzeuge 1 mittels der Konsolidiereinrichtung 5 wird jeweils ein Inneneinlegeelement 6 in den Aussparungen 4 angeordnet. Das Anordnen der Inneneinlegeelemente 6 in den Aussparungen 4 kann beispielsweise mittels eines oder mehrerer Roboter durchgeführt werden. Mittels der Inneneinlegeelemente 6 kann vorteilhafterweise erreicht werden, dass auch Rahmen förmige Halbzeuge 1 konsolidiert werden können, ohne dass während des Konsolidiervorgangs der beim Konsolidieren entstehende prozessbedingte Druck abfällt.

Im gezeigten Ausführungsbeispiel bestehen die Inneneinlegeelemente 6 aus Teflon. Alternativ können die Inneneinlegeelemente 6 beispielsweise auch aus Aluminium hergestellt sein. Vorzugsweise sind Inneneinlegeelemente 6 an die jeweiligen Aussparungen 4 angepasst. Insbesondere wird bevorzugt, dass die Inneneinlegeelemente 6 hinsichtlich ihrer Form, Größe und/oder Anzahl an die Aussparungen 4 der Halbzeuge 1 angepasst sind. Beispielsweise weisen die Inneneinlegeelemente 6 in lateraler Richtung maximal einen Abstand von 5 mm zu den Halbzeugen 1 auf.

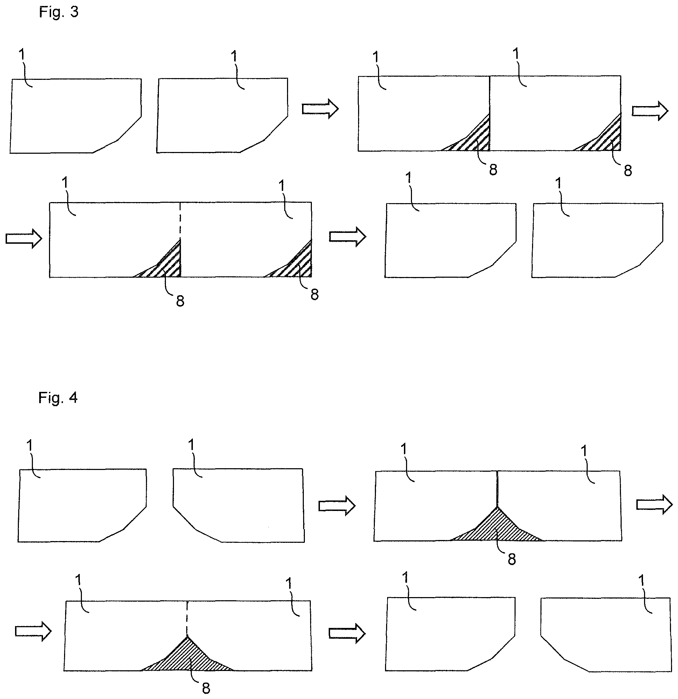

Figur 3 zeigt Verfahrensschritte des hier beschriebenen Verfahrens gemäß einem weiteren Ausführungsbeispiel. Im Unterschied zu dem in den Figuren 1A bis 1D gezeigten Ausführungsbeispiel weisen die unkonsolidierten Halbzeuge 1 nach ihrer Herstellung eine äußere Form auf, die es nicht erlaubt, die Halbzeuge 1 derart nebeneinander anzuordnen, dass keine Lücke zwischen zwei nebeneinander angeordneten Halbzeugen entsteht. Im dargestellten Ausführungsbeispiel weisen die Halbzeuge 1 eine einfach oder mehrfach gekrümmte Seitenfläche auf.

Vor dem Konsolidieren der Halbzeuge 1 mittels der Konsolidiereinrichtung 5 werden die Halbzeuge 1 in direktem Kontakt zueinander angeordnet und Außeneinlegelemente 8 zwischen zwei direkt benachbarten Halbzeugen 1 angeordnet. Die Außeneinlegelemente 8 sind vorzugsweise in ihrer Form und Größe an die der direkt benachbarten Halbzeuge angepasst. Mittels der Außeneinlegelemente 8 können vorteilhafterweise Halbzeuge mit jeglicher Außenkontur in einem kontinuierlichen Konsolidierprozess konsolidiert werden.

Die im Zusammenhang mit der Figur 4 gezeigten Verfahrensschritte unterscheiden sich von dem in der Figur 3 gezeigten Ausführungsbeispiel darin, dass zwei bereitgestellte unkonsolidierte Halbzeuge 1 derart zueinander angeordnet werden, dass sich ihre unregelmäßigen Außenkonturen gegenüberliegenden. Die Halbzeuge 1 werden wieder derart zueinander angeordnet, dass sie sich in direktem Kontakt zueinander befinden. Zwischen den Halbzeugen 1 wird ein Außeneinlegeelement 8 angeordnet. Das in Figur 4 gezeigte Verfahren hat den Vorteil, dass in einem kontinuierlichen Konsolidierprozess nicht zwischen allen benachbarten Halbzeugen 1 Außeneinlegelemente 8 angeordnet werden müssen, da die Halbzeuge 1 derart positioniert werden, dass sich einerseits jeweils ihre unregelmäßigen Außenkonturen gegenüberliegenden und andererseits jeweils ihre regelmäßigen Außenkonturen ebenfalls gegenüber liegen.

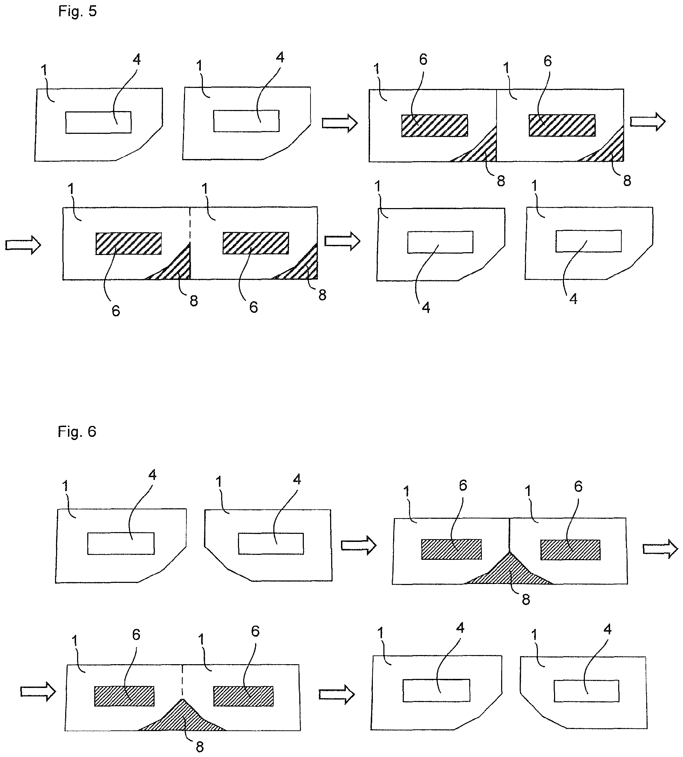

Die Figur 5 zeigt Verfahrensschritte des hier beschriebenen Verfahrens gemäß einem weiteren Ausführungsbeispiel. Im Unterschied zu dem in Figur 3 gezeigten Ausführungsbeispiel weisen die unkonsolidierten Halbzeuge 1 nach ihrer Herstellung jeweils eine Aussparung 4 auf, in welchen vor dem Konsolidieren jeweils ein Inneneinlegeelement 6 angeordnet wird. Die Inneneinlegeelemente 6 können beispielsweise wie im Zusammenhang mit der Figur 2 ausgeführt ausgebildet sein.

In der Figur 6 ist ein weiteres Ausführungsbeispiel des hier beschriebenen Verfahrens zur Herstellung von Bauteilen aus thermoplastischem faserverstärktem Kunststoff ausgehend von imprägnierten Fasertapes dargestellt. Im Unterschied zu dem in Figur 4 gezeigten Ausführungsbeispiel weisen die unkonsolidierten Halbzeuge 1 nach ihrer Herstellung jeweils eine Aussparung 4 auf. Vor dem Konsolidieren wird jeweils ein Inneneinlegeelement 6 in den Aussparungen 4 angeordnet. Die Inneneinlegeelemente 6 können wiederum wie oben im Zusammenhang mit der Figur 2 beschrieben ausgebildet sein.

Figur 7 zeigt Verfahrensschritte des hier beschriebenen Verfahrens gemäß einem weiteren Ausführungsbeispiel, wobei die unkonsolidierten Halbzeuge 1 nach ihrer Herstellung im Unterschied zu dem in Figur 2 beschriebenen Verfahren eine Mehrzahl von Aussparungen 4 aufweisen, die sich jeweils von einer Oberfläche eines Halbzeugs zur gegenüberliegenden Oberfläche erstrecken. Vor dem Konsolidieren der Halbzeuge wird jeweils zumindest ein Inneneinlegeelement 6 in den Aussparungen angeordnet. Mittels des hier beschriebenen Verfahrens können vorteilhafterweise Halbzeuge mit einer Mehrzahl von Aussparungen konsolidiert werden.

In der Figur 8 ist eine Konsolidiereinrichtung 5 dargestellt, die als Doppelbandpresse mit integrierter Heiz- und Pressfunktion ausgebildet ist. Die Doppelbandpresse weist zwei Bänder 54, 55 auf, die als Endlosbänder ausgeführt sind, und mittels derer die Halbzeuge 1 in einem kontinuierlichen Prozess gepresst und durch eine Vielzahl von Heizzonen 51, 52, 53 bewegt werden können. Vorzugsweise weisen die Heizzonen 51, 52, 53 jeweils verschiedene Temperaturen auf. Beispielsweise kann die erste Heizzone 51 eine Temperatur von 100 °C, die zweite Heizzone eine Temperatur von 380 °C und die dritte Heizzone 53 eine Temperatur von 60 °C aufweisen. Nach dem Konsolidieren mittels der Konsolidiereinrichtung 5 können die konsolidierten und miteinander verbundenen Halbzeuge 1 mittels der Trennvorrichtung 7 vereinzelt werden.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Halbzeug
- 2: Fasertape
- 3: Rahmenform
- 4: Aussparung
- 5: Konsolidiereinrichtung
- 51, 52, 53: Heizzone
- 54, 55: Band
- 6: Inneneinlegeelement
- 7: Trennvorrichtung
- 8: Außeneinlegeelement

## Patentansprüche

1. Verfahren zur Herstellung von Bauteilen aus thermoplastischem faserverstärktem Kunststoff ausgehend von mit Matrixmaterial imprägnierten Fasertapes, aufweisend die folgenden Schritte:
- Herstellen einer Vielzahl von Halbzeugen (1), die jeweils eine Mehrzahl von unkonsolidierten Lagen von Fasertapes (2) aufweisen,
- Anordnen der Halbzeuge (1) in einer Konsolidiereinrichtung (5) derart, dass sich die Halbzeuge in direktem Kontakt zueinander befinden,
- Konsolidieren der Halbzeuge (1) mittels der Konsolidiereinrichtung (5), wobei sich die Halbzeuge (1) während des Konsolidiervorgangs zumindest teilweise miteinander verbinden,
- Anschließendes Durchtrennen der miteinander verbundenen Halbzeuge (1) mittels einer Trennvorrichtung (7), so dass die Halbzeuge wieder in vereinzelter Form vorliegen.

2. Verfahren nach Anspruch 1, wobei die Halbzeuge während des Konsolidierens in einem kontinuierlichen Prozess durch eine Vielzahl von Heizzonen (51, 52, 53) innerhalb der Konsolidiereinrichtung (5) bewegt werden.

3. Verfahren nach einem der Ansprüche 1 oder 2, wobei das Anordnen der Halbzeuge (1) in der Konsolidiereinrichtung (5) vollautomatisiert durchgeführt wird.

4. Verfahren nach einem der vorhergehenden Ansprüche, wobei vor dem Konsolidieren jeweils ein oder mehrere Außeneinlegelemente (8) zwischen zwei direkt benachbarten Halbzeugen (1) angeordnet werden.

5. Verfahren nach Anspruch 4, wobei die Außeneinlegelemente (8) in ihrer Form und/oder Größe an die direkt benachbarten Halbzeuge (1) angepasst sind.

6. Verfahren nach einem der vorhergehenden Ansprüche, wobei die Halbzeuge (1) jeweils eine Rahmenform (3) mit zumindest einer Aussparung (4) aufweisen, und wobei vor dem Konsolidieren der Halbzeuge (1) jeweils ein Inneneinlegeelement (6) in den Aussparungen (4) angeordnet wird.

7. Verfahren nach Anspruch 6, wobei das Anordnen der Inneneinlegeelemente (6) in den Aussparungen (4) vollautomatisiert durchgeführt wird.

8. Verfahren nach einem der Ansprüche 6 oder 7, wobei die Inneneinlegeelemente (6) fest mit einem Band der Konsolidiereinrichtung (5), insbesondere einem Endlosband der Konsolidiereinrichtung (5), verbunden sind.

9. Verfahren nach einem der Ansprüche 6 bis 8, wobei die Inneneinlegeelemente (6) in ihrer Form und/oder Größe an die jeweiligen Aussparungen (4) angepasst sind.

10. Verfahren nach einem der Ansprüche 6 bis 9, wobei die Inneneinlegeelemente (6) nach dem Anordnen in den Aussparungen (4) allseitig einen Abstand von maximal 5 mm zu den Halbzeugen (1) aufweisen.

11. Verfahren nach einem der Ansprüche 6 bis 10, wobei die Inneneinlegeelemente (6) Polytetrafluorethylen aufweisen oder aus Polytetrafluorethylen bestehen.

12. Verfahren nach einem der vorhergehenden Ansprüche, wobei zumindest ein Halbzeug (1) eine Mehrzahl von innenliegenden Aussparungen (4) aufweist, in welche vor dem Konsolidieren jeweils ein Inneneinlegeelement (6) angeordnet wird.

13. Verfahren nach einem der vorhergehenden Ansprüche, wobei die Konsolidiereinrichtung (5) als kombinierte Press- und Heizeinrichtung ausgebildet ist

14. Verfahren nach einem der vorhergehenden Ansprüche, wobei die Konsolidiereinrichtung (5) als Doppelbandpresse ausgebildet ist.

## Claims

1. A method for producing components from thermoplastic fibre-reinforced plastics material starting from fibre tapes impregnated with matrix material, having the following steps:
- producing a large number of semi-finished products (1) which in each case have a plurality of non-consolidated layers of fibre tapes (2),
- arranging the semi-finished products (1) in a consolidation means (5) such that the semi-finished products are in direct contact with each other,
- consolidating the semi-finished products (1) by means of the consolidation means (5), wherein the semi-finished products (1) during the consolidation operation at least partly join together,
- subsequently severing the semi-finished products (1) which are joined together by means of a separating device (7), so that the semi-finished products are again present in individualised form.

2. A method according to Claim 1, wherein the semi-finished products during the consolidation are moved through a large number of heating zones (51, 52, 53) within the consolidation means (5) in a continuous process.

3. A method according to one of Claims 1 or 2, wherein the arranging of the semi-finished products (1) in the consolidation means (5) is carried out in a fully automated manner.

4. A method according to one of the preceding claims, wherein prior to the consolidation in each case one or more external insert elements (8) are arranged between two directly adjacent semi-finished products (1).

5. A method according to Claim 4, wherein the external insert elements (8) are adapted in their shape and/or size to the directly adjacent semi-finished products (1).

6. A method according to one of the preceding claims, wherein the semi-finished products (1) in each case have a frame shape (3) with at least one cutout (4), and wherein prior to the consolidation of the semi-finished products (1) in each case an internal insert element (6) is arranged in the cutouts (4).

7. A method according to Claim 6, wherein the arranging of the internal insert elements (6) in the cutouts (4) is carried out in a fully automated manner.

8. A method according to one of Claims 6 or 7, wherein the internal insert elements (6) are connected fixedly to a belt of the consolidation means (5), especially an endless belt of the consolidation means (5).

9. A method according to one of Claims 6 to 8, wherein the internal insert elements (6) are adapted in their shape and/or size to the respective cutouts (4).

10. A method according to one of Claims 6 to 9, wherein the internal insert elements (6) after being arranged in the cutouts (4) have on all sides a distance of at most 5 mm from the semi-finished products (1).

11. A method according to one of Claims 6 to 10, wherein the internal insert elements (6) include polytetrafluoroethylene or consist of polytetrafluoroethylene.

12. A method according to one of the preceding claims, wherein at least one semi-finished product (1) has a plurality of internal cutouts (4) in which in each case one internal insert element (6) is arranged prior to the consolidation.

13. A method according to one of the preceding claims, wherein the consolidation means (5) is formed as a combined pressing and heating means.

14. A method according to one of the preceding claims, wherein the consolidation means (5) is formed as a twin-belt press.

## Revendications

1. Procédé de fabrication de pièces en matériau synthétique thermoplastique renforcés par des fibres à partir de bandes fibreuses imprégnées d'un matériau formant matrice comprenant les étapes suivantes consistant à :
- fabriquer un ensemble de produits semi-finis (1) qui comportent chacun un ensemble de couches de bandes fibreuses (2) non consolidées,
- mettre en place le produit semi-fini (1) dans un dispositif de consolidation (5) de sorte que les produits semi-finis se trouvent en contact direct les uns avec les autres,
- consolider les produits semi-finis (1) au moyen du dispositif de consolidation (5), les produits semi-finis (1) se liant au moins partiellement les uns avec les autres pendant le processus de consolidation,
- puis séparer les produits semi-finis (1) liés les uns au autres au moyen d'un dispositif de séparation (7) de sorte que les produits semi-finis se présentent à nouveau sous une forme individuelle.

2. Procédé conforme à la revendication 1,
selon lequel lors de la consolidation selon un processus continu les produits semi-finis sont déplacés au travers d'un ensemble de zones de chauffage (51, 52, 53) à la partie interne du dispositif de consolidation (5).

3. Procédé conforme à l'une des revendications 1 ou 2,
selon lequel la mise en place des produits semi-finis (1) dans l'installation de consolidation (5) est effectuée de façon totalement automatisée.

4. Procédé conforme à l'une des revendications précédentes,
selon lequel avant la consolidation un ou plusieurs élément(s) d'insertion interne(s) (8) sont respectivement positionnés entre deux produits semi-finis (1) directement voisins.

5. Procédé conforme à la revendication 4,
selon lequel la forme et/ou la dimension des éléments d'insertion externes (8) est(sont) adaptée(s) au produit semi-fini (1) directement voisin.

6. Procédé conforme à l'une des revendications précédentes,
selon lequel les produits semi-finis (1) ont chacun la forme d'un cadre (3) ayant au moins un évidement (4), et avant la consolidation des produits semi-finis (1) un élément d'insertion interne est respectivement positionné dans les évidements (4).

7. Procédé conforme à la revendication 6,
selon lequel la mise en place des éléments d'insertion externes (6) dans les évidements (4) est effectués de façon totalement automatisée.

8. Procédé conforme à l'une des revendications 6 et 7,
selon lequel les éléments d'insertion internes (6) sont reliés solidairement avec une bande du dispositif de consolidation (5), en particulier une bande sans fin de ce dispositif (5).

9. Procédé conforme à l'une des revendications 6 à 8,
selon lequel la forme et/ou la dimension des éléments d'insertion externes (6) est(sont) adaptée(s) aux évidements (4) respectifs.

10. Procédé conforme à l'une des revendications 6 à 9,
selon lequel après leurs mise en place dans les évidements (4) les éléments d'insertion internes (6) sont de tout côté à une distance maximum de 5mm du produit semi-fini (1).

11. Procédé conforme à l'une des revendications 6 à 10,
selon lequel les éléments d'insertion internes (6) comportent du polytétrafluoréthylène ou sont réalisés en polytétrafluoréthylène.

12. Procédé conforme à l'une des revendications précédentes,
selon lequel au moins un produit semi-fini (1) comporte un ensemble d'évidements internes (4) dans lesquels un élément d'insertion interne (6) est respectivement mis en place avant le consolidation.

13. Procédé conforme à l"une des revendications précédentes,
selon lequel le dispositif de consolidation (5) est réalisé sous la forme d'un dispositif combiné de compression et de chauffage.

14. Procédé conforme à l'une des revendications précédentes,
selon lequel le dispositif de consolidation (5) est réalisé sous la forme d'une presse à double bande.
